# EUROPEAN PATENT APPLICATION

(11) **EP 1 122 895 A1**
(43) Date of publication of application: **08.08.2001**
(21) Application number: 00400289.5
(22) Date of filing: 03.02.2000
(51) Int. Cl.: H04B 7/26, H04Q 7/36

(54) **Time division duplex cellular communications system with dynamic slot allocation and reduced interference**

(71) Applicant: MOTOROLA, INC., Schaumburg, IL 60196 (US)
(72) Inventor: Sartori, Philippe, Schaumburg, Illinois 60195 (US); Moorut, Ravinda, 94230 Cachan (FR)
(74) Representative: Kopacz, William James

(57) **Abstract**

The problem of maximising system capacity while keeping interference to a minimum in a cellular communications system where asymmetrical data rates between uplinks and downlinks predominate is addressed. Base Stations (38, 40) and a plurality of Mobile Stations (42, 43, 44) communicate over channels having time slots assigned for uplink and downlink. A base station (38) identified those Mobile Stations (42) which are Potentially Low Interferers, and re-assigns time slots for use by such mobile stations.

## Description

### Field of the Invention

This invention relates to time division duplex (TDD) cellular telephone systems, and more particularly to a means for modifying the TDD frame structure in order to increase system capacity without incurring the penalty of additional, significant interference.

### Background of the Invention

Modern radiotelephone systems rely on geographical frequency reuse to increase the number of users able to simultaneously access the system and to increase the capacity of the system in terms of the bit rate available to users of the system. Such cellular telephone systems control the transmitting power of Mobile Stations (MSs) in their communications with their assigned Base Transceiver Stations (BTSs) such that the minimum transmitting power necessary to sustain effective communications is used. This power control reduces the potential interference between MSs operating on the same or adjacent frequencies (in Frequency Division Duplex systems, FDDs) or time slots (in Time Division Duplex Systems, TDDs).

Presently, cellular radiotelephone systems are used primarily for carrying voice traffic (whether in analog or digital form) hence the need for uplink frequencies or time slots, in which the Mobile Stations transmit to the Base Stations, and downlink frequencies or time slots in which the Base Stations transmit to the Mobile Stations is relatively symmetrical, that is, there is approximately the same need for uplink channels as downlink channels.

It is anticipated, however, that the traffic needs of so-called third generation mobile telephone systems will be highly asymmetric, that is, the bit rates requested for the uplinks and the downlinks will be different. The common assumption is that the downlink traffic (that is, traffic from the Base Station to the Mobile Station) will predominate. This is so because of the anticipated increase in data traffic, for example browsing of the World Wide Web by Mobile Stations. There will arise circumstances, however, where uplink traffic will predominate, and provision must be made for accommodating this situation as well.

The next-generation European Cellular System now in development, the UTRA (UMTS Terrestrial Radio Access) System, has both Frequency Division Duplex and Time Division Duplex components. The FDD component is not well suited for highly asymmetric data, since the uplink and downlink frequencies are conjointly assigned. On the other hand the UTRA TDD mode seems to be very well suited to handling asymmetric data.

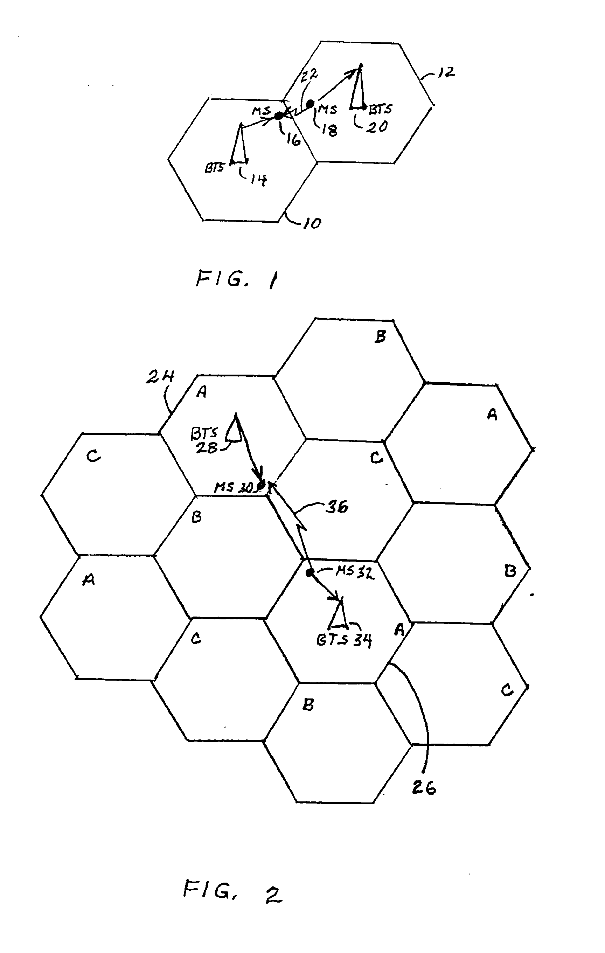

In the TDD mode the level of inter-cell interference can be much higher than in FDD mode due to the simultaneous emissions of Base Stations and Mobile Stations. FIG. 1 describes a critical interference scenario in a Time Division Duplex system with a cell reuse pattern of one, that is, the same frequency is used for all cells. FIG. 1 shows two adjacent cells 10 and 12, and a downlink signal from BTS 14 to MS 16. Also shown is an uplink signal from MS 18 to BTS 20, and an interfering signal 22 from MS 18 to MS 16 which occurs when MS 18 transmits at the same time that MS16 is receiving a signal from BTS 14.

The distance between MS 16 and MS 18 is smaller than the distance between either MS 16 and MS 18 and its BTS 14 and 20 respectively. With MS 16 receiving and both BTS 14 and MS 18 transmitting, the link between BTS 14 and MS 16 is heavily interfered due to the low path loss between MS 16 and MS 18.

FIG. 2 shows a critical interference scenario in a Time Division Duplex system with a cell reuse pattern of three to one, that is, there are three different frequencies in use, arranged so that adjacent cells use different frequencies. The frequencies are identified in FIG.2 with the letters A, B, and C. Cells 24 and 26 using the same transmitting frequency are separated in this case by adjacent cells having BTSs, not shown, transmitting on different frequencies. A BTS 28 transmits on a downlink to MS 30, while MS 32 transmits on an uplink to its BTS 34. Again an interfering signal 36 is shown between MS 32 and MS 30.

Since the distance between BTS 28 and MS 30 is approximately the same as the distance between BTS 34 and MS 32, the level of interference seen by MS 30 is potentially high.

It should be noted that, taking other interferers (not shown) into account, the two MSs in each of FIGS. 1 and 2 need not be so close to each other to create a significant level of interference.

It should also be noted that, since TDD mode is considered for high bit rate, asymmetrical operations, if multi-codes (i.e., more than one code) are assigned to MS 18 and MS 32 in the above examples, the level of interference dramatically increases. Indeed, although assigning more than one code increases the capacity, it also increases the level of interference caused by this user as a given user assigned with several codes can be assimilated to several users assigned with one code. Therefore, the interference can be viewed as having been generated by several codes instead of one code only.

Heretofore system designers have attempted to solve the problem of interference in TDD systems through the use of so-called slot-hopping or frequency-hopping, where, for example, for every frame (or assigned spectrum) of eight time slots (or carriers), the slot (carrier) assigned to the MS is different. Therefore, if one slot (carrier) is highly interfered, an MS will suffer from it only one-eighth of the time. As a result, the interference is averaged. This solution is very effective when a system is not fully loaded. However, at high traffic loads it is likely that nearly all the slots will be interfered. As a consequence, slot-(or frequency) hopping will not reduce interference since on every newly assigned slot a high interfering power will be received.

Another proposed solution is to provide fixed uplink and downlink slot assignments. But if this solution solves the uplink-downlink interference problem, it wastes system resources. A common scenario would be that all available downlink capacity is used whereas many of the uplink slots are unused due to the asymmetry of the transmission bit rate needs.

An alternative arrangement which seeks to mitigate the disadvantages of the above known methods is proposed herein.

### Summary of the Invention

Accordingly, the present invention comprises a communications system including;
a first cell and a plurality of neighbouring cells, each cell including at least one mobile station and a base station for providing a communications service thereto via a communications channel having a time-frame structure comprising a plurality of time slots,
means for initially designating said time slots as either a first type time slot or a second type time slot,
means for receiving a request for a communications service on a first type of time slot to be provided by a base station serving the first cell to a mobile station located within the first cell,
means for identifying a mobile station in the first cell which is not a potential source of significant interference to a neighbouring cell,
means for re-designating a time-slot from a second type to a first type,
and means for instructing the identified mobile station to communicate with the base station serving the first cell on the re-designated time slot.

The first type of time slot may be an uplink slot and the second type, a downlink slot or vice versa. If extra capacity is required on the uplink, e.g., a slot originally assigned as a downlink slot is converted to an uplink slot. This newly converted slot is then allocated for use by the identified low interference mobile station. This frees up uplink resource. One or more than one time-slots may be converted depending on system requirements.

The invention thus provides a mechanism for increasing capacity of a TDD system without making a significant contribution to an increase in inter-cell interference levels.

Any of the means for designating, means for receiving a request, means for identifying, means for re-designating and means for instructing may be located within the base station or at a remote base station controller which forms an optional additional feature of the invention.

Re-designation of time-slots in a bunch of cells comprising the first cell and several of its neighbours may be effected simultaneously under the control of the base station controller.

The means for identifying sources of low interference may rely on measurement techniques relating to relative received signal strength, distance from its respective base station, power emitted, or required bit rate, for example.

A typical Time Division Duplex communications system, such as the European GSM digital cellular system provides timing such that during one frame of time there are defined a plurality of slots which are assigned to each Mobile Station requesting communications on some basis such that each Mobile Station may be assigned one time slot during which the Mobile Station transmits data to its assigned Base Station (uplink) and one slot during which the Mobile Station receives data from its assigned Base Station (downlink). A typical TDD frame structure is as follows:

| | | | | | | | | |
|---|---|---|---|---|---|---|---|---|
| Link Type | UL | UL | UL | UL | DL | DL | DL | DL |
| Slot Number | 0 | 1 | 2 | 3 | 4 | 5 | 6 | 7 |

In such a system it should be noted that the number of uplink slots and the number of downlink slots is the same, i.e., four uplink and four downlink slots per frame. In the following embodiments of the instant invention, it is assumed that the system starts with pre-assigned slots as shown above or with some similar scheme of pre-assignment.

Where the primary use of the system is in carrying voice traffic, the traffic rate tends to be relatively symmetrical since both parties speak, and the number of uplink slots required tends to approximate the number of downlink slots required. In such a case, the pre-assignment as described above is adequate.

As noted earlier, however, it is anticipated that the traffic needs of so-called third generation mobile telephone systems will be highly asymmetric, that is, the bit rates requested for the uplinks and the downlinks will be different. In such circumstances it would be useful to be able to reassign slots on the basis of data transmission needs rather than have the slots statically assigned. The problem of assigning slots on other than a static basis, however is the potential for interference between, for example, a Mobile Station receiving information in one cell (downlink) at the same time a Mobile Station in an adjacent cell is transmitting information to its Base Station in the same time slot. This problem becomes more acute, of course, when the Mobile Stations are far from their respective Base Stations, since the emissions of the Mobile Stations will be at a relatively high level (as adjusted by the Base Stations to assure effective communication). This has been described in the discussion of FIG. 1 and FIG. 2.

The solution to this problem is to differentiate between users (Mobile Stations) that can create high levels of interference in neighboring cells from those transmitting at low power.

This can be accomplished through the technique of identifying Potentially High Interferers and Low Interferers. Users close to their respective Base Stations emit with low power, and not only are they unlikely to cause interference with others as a result of the power of their signals but, since they are relatively close to their Base Stations they also are quite far from any potential victim Mobile Stations. Thus they will not play a significant role in the "uplink-downlink" problem, so they are referred to hereafter as "Low Interferers" (LIs). On the other hand, those Mobile Stations near their cell boundaries usually transmit at relatively higher power and are closer to a potential victim. These will be referred to hereafter as "Potentially High Interferers" (PHIs).

A preferred way of making the distinction between a PHI and an LI is made as follows:

If the MS is emitting power above a given threshold, this MS is a PHI; otherwise it is considered a LI.

The impact, in terms of interference, of a Low Interferer transmitting on a slot initially assigned for downlink transmission, for example, is quite low. This feature can be used to increase uplink capacity. The impact of a Low Interferer is low even if it is transmitting on a slot assigned in an adjacent cell as an uplink slot.

### Brief Description of the Drawings

FIG. 1 shows a critical interference scenario in a Time Division Duplex system with a cell reuse pattern of one.

FIG. 2 shows a critical interference scenario in a Time Division Duplex system with a cell reuse pattern of three to one.

FIG. 3 is a schematic diagram of a cellular communications system in accordance with the present invention.

FIG. 4 is an algorithm showing slot assignment in the system of Figure 3.

FIG. 5 is an algorithm showing an alternative method of slot assignment in the system of Figure 3.

### Description of the Preferred Embodiments

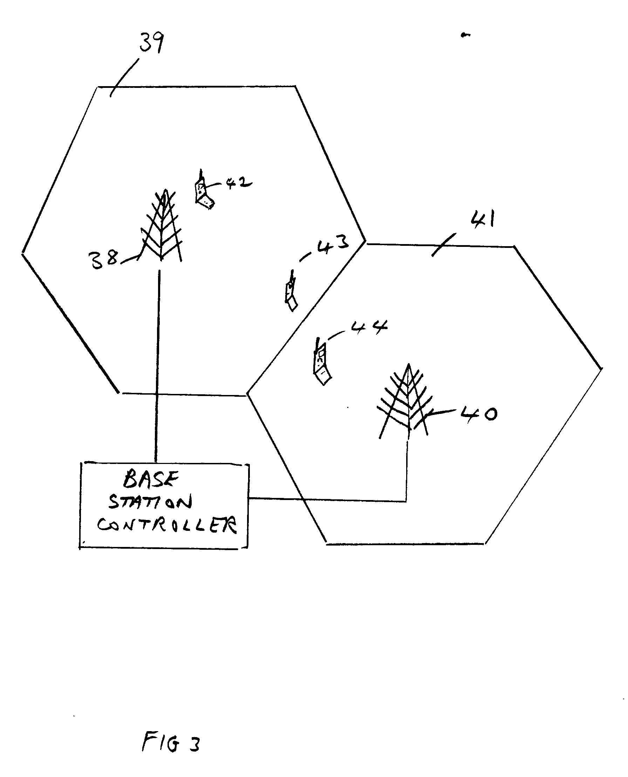

In Figure 3 a BTS 38 serves a first cell 39 and a BTS 40 serves a neighbouring cell 41. Two mobile stations 42 and 43 in the first cell are in communication with the BTS 38, and one mobile station 44 in the neighbouring cell 41 is in communication with the BTS 38, 40.

The mobile station 43 is distant from the BTS 40 yet close to the border of the neighbouring cell 41. Thus, the mobile station 43 is a potential source of interference (to the mobile station 44) for the reasons described above. Conversely, the mobile station 42 is a potential low interferer owing to its proximity to the BTS 38.

Each BTS 38, 40 is capable of assigning time slots to the frame structure of the communications channels over which it communicates with mobile stations in its cell and of assigning specific mobile stations to certain time slots. BTS 38 is also capable of identifying mobile station 42 as a low interferer and mobile station 43 as a high interferer.

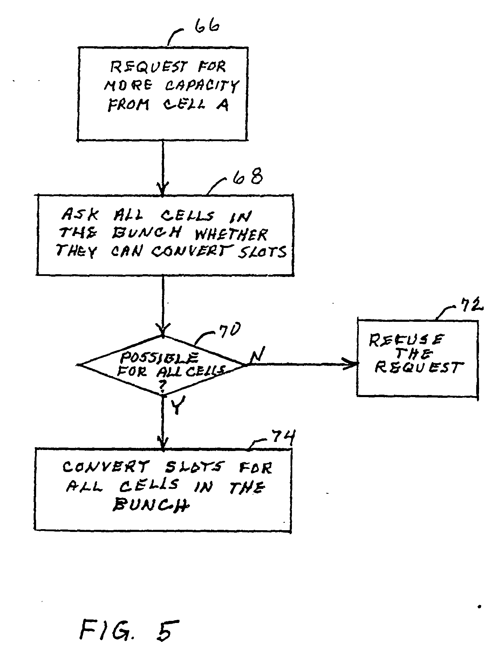

Base Station Controller 45 is adapted to assign time slots in both cells 39, 41 in accordance with an algorithm to be described with reference to Figure 5.

As an example of operation of the system of Figure 3, suppose that the slot assignment of the frame structure in cell 39 is initially as tabulated below:

| Slot no. | 0 | 1 | 2 | 3 | 4 | 5 | 6 | 7 |
|---|---|---|---|---|---|---|---|---|
| Slot type | UL | UL | UL | UL | DL | DL | DL | DL |
| Mobile station | X | X | 43 | 42 | | | X | X |

Mobile station 42 is assigned UL slot 3 and mobile station 43 is transmitting data on UL slot 2.

The distant mobile station 43 then sends a request to the BTS 38 for an increase of bit-rate on the uplink i.e., is requires an additional uplink slot. Say that currently, all uplink slots 0 - 3 are loaded to full capacity. The BTS 38 identifies the proximate mobile station 42 as a potential low interferer. Consequently it re-assigns un-used downlink slot 4 as an uplink slot and allocates it for use by mobile station 42. This action frees up slot 3 for use by mobile station 43. The frame structure is now as shown below:

| Slot no. | 0 | 1 | 2 | 3 | 4 | 5 | 6 | 7 |
|---|---|---|---|---|---|---|---|---|
| Slot type | UL | UL | UL | UL | UL | DL | DL | DL |
| Mobile station | X | X | 43 | 43 | 42 | | | |

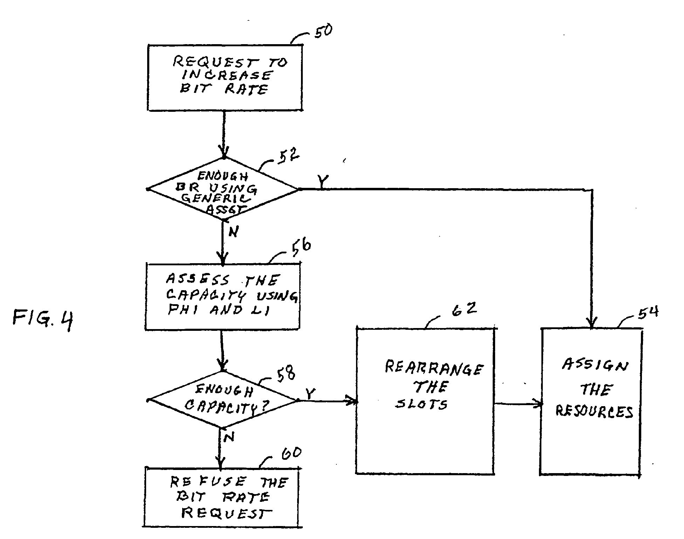

FIG. 4 is an algorithm for the implementation of slot assignment in a communications system in accordance with the present invention. For some reason (e.g. more users, one user needing more bit rate to transmit, for example, video or another high-rate data stream), there is a need for more bit rate on the uplink. This is the scenario pointed out earlier that can cause high levels of interference for neighboring cells, particularly if the MS requesting additional bit-rate is near a cell boundary. A request is received 50 to increase the bit rate on the uplink. The BTS checks to determine whether there is enough capacity remaining on the predetermined UL slots. If yes, the assignment of an additional UL slot is made 54.

If not enough capacity remains on the predetermined UL slots, the BTS checks all the users and computes the gain in capacity available 56 if the slot assignment were made in a different way, taking into account the status of the users as Potentially High Interferers and Low Interferers. If additional Uplink LIs can be put on initially assigned Downlink slots, where their interfering impact is low, pre-assigned Uplink slots can be freed up for use by PHIs.

If there is still not enough capacity 58 to grant the initial request, the request is refused 60 (or partially refused; it may be possible to grant less than the entirety of the original request by rearranging some of the slots). If the additional capacity can be gained, the slots are rearranged 62 and the resources are reassigned 54.

If extra capacity is required on DL slots instead, then an UL slot is re-assigned as a DL slot.

In a further embodiment it is possible to deploy a system in which each cell is not considered independent as assumed for the previous algorithm. The UTRA TDD network, for example, has intercell communication whereby the base transceiver stations can exchange information regarding their loading and slot occupation. For example, each cell is able to exchange information with all other cells in a group of cells termed a "Bunch". This notion of a bunch of cells has been introduced by the FRAMES consortium. Each cell is not considered as isolated but can exchange information with all the cells belonging to the same bunch. Depending on the layer 2 and 3 termination, it will be easy to exchange information between cells and the radio resource management can be done at the RNC level if desired. In such a system the Bunch of cells will together renegotiate the reassignment of slots as was done independently by one cell in the algorithm of FIG. 4.

FIG. 5 is an algorithm for implementation of slot assignment at the Bunch level. A request for more resources is received 66 at the control level i.e. in the base station controller (45) for the cell Bunch, that is, at the level where each of the cells in the Bunch communicates with the other cells in the Bunch, for example, for coordination of handovers or the like. All the cells in the Bunch are asked 68 whether they can convert some pre-assigned Downlink slots into Uplink slots. If it is not possible for all cells to make the conversion 70, the request is refused 72. If conversion is possible for all cells, the appropriate slots in all cells are converted. Of course, as in the previous algorithm provision can be made for partially granting a request instead of refusing the request entirely.

If all cells of the bunch need more downlink capacity, than uplink, then some initially assigned uplink slots re re-assigned as downlink slots.

## Claims

1. A communications system including;
a first cell (39) and a plurality of neighbouring cells (41), each cell including at least one mobile station (42) and a base station (38) for providing a communications service thereto via a communications channel having a time-frame structure comprising a plurality of time slots,
means (38) for initially designating said time slots as either a first type time slot or a second type time slot, and characterised by;
means (38) for receiving a request for a communications service in a first type of time slot to be provided by a base station (38) serving the first cell to a mobile station (43) located within the first cell,
means (38) for identifying a mobile station (42) in the first cell which is not a potential source of significant interference to a neighbouring cell (41), means (38) for re-designating a time-slot from a second type to a first type, and means (38) for instructing the identified mobile station (42) to communicate with the base station serving the first cell (38) on the re-designated time slot.

2. A system according to Claim 1 wherein the means for identifying (38) is adapted to identify mobile stations (42, 43) as a function of their respective distances from their Base Stations.

3. A system according to Claim 1 wherein the means for identifying (38) is adapted to identify mobile stations (42, 43) as a function of emitted power.

4. A system according to claim 1 wherein the means for identifying (38) is adapted to identify mobile stations (42, 43) as a function of their respective signal strengths.

5. A system according to claim 1 wherein the means for identifying (38) is adapted to identify mobile stations (42, 43) as a function of their required bit rate.

6. A system according to any preceding claim and further including means (45) for re-designating time-slots simultaneously in a bunch of cells (39, 41).

7. A method of operating a communications system wherein the system includes;
a first cell (39) and a plurality of neighbouring cells (41), each cell including at least one mobile station (42) and a base station (38) for providing a communications service thereto via a communications channel having a time- frame structure comprising a plurality of time slots, the method including the steps of initially designating said time slots as either a first type time slot or a second type time slot, and characterised by the steps of receiving (50) a request for a communications service on a first type of time slot to be provided by a base station (38) serving the first cell to a mobile station (43) located within the first cell,
identifying (56) a mobile station (42) in the first cell(38) which is not a potential source of significant interference to a neighbouring cell (41), re-designating (62) a time-slot from a second type to a first type,
and instructing (54) the identified mobile station to communicate with the base station serving the first cell on the re-designated time slot.
